# FASCICULE DE BREVET EUROPEEN

(11) **EP 3 378 806 B1**
(45) Date de publication et mention de la délivrance du brevet: **25.01.2023**
(21) Numéro de dépôt: 18172001.2
(22) Date de dépôt: 23.06.2016
(51) Int. Cl.: B31B 50/06, B65H 1/30, B65H 5/00, B65H 7/04, B25J 11/00, B25J 15/00, B25J 15/06, B25J 15/08

(54) **DISPOSITIF ET METHODE DE CHARGEMENT D'UN MAGASIN**
VORRICHTUNG UND METHODE ZUM BEFÜLLEN EINES LAGERS
DEVICE AND METHOD FOR LOADING A MAGAZINE

(30) Priorité: 30.06.2015 FR 1556107
(43) Date de publication de la demande: 26.09.2018
(62) Demande divisionnaire de: 16175991.5
(73) Titulaire: SIDEL PARTICIPATIONS, 76930 Octeville-sur-Mer (FR)
(72) Inventeur: GAUTHERON, Anthony, 21910 CORCELLES LES CÎTEAUX (FR)
(74) Mandataire: Sidel Group

(56) Documents cités:
- US-A- 5 970 834
- US-A1- 2004 240 979

## Description

La présente invention relève du domaine du conditionnement de produits par encaissage, et a pour objet, d'une part, un dispositif alimentant des plaques destinées à former des caisses cartonnées, et, d'autre part, un procédé mettant en oeuvre ce dispositif.

Dans ce domaine, les produits sont traités de façon industrielle dans des postes successifs, puis, une fois les produits terminés, ils sont envoyés pour une mise en caisse cartonnée. Ces caisses en carton sont obtenues à partir de plaques planes cartonnées qui sont érigées au sein d'un moyen de formage de caisse.

Par exemple on connait WO2008047008 qui présente une solution de saisie des plaques puis de formage de caisses. Ce poste de formage de caisse présente un magasin muni d'un tapis, sur lequel les plaques successives sont déposées, pour être ensuite saisies l'une après l'autre par un système de ventouses. Les plaques dans le magasin sont à peu près verticales.

WO9852826 présente quant à lui une unité de formage de caisses ouvertes, où un tourniquet vient saisir depuis le magasin les plaques les unes après les autres. Le tapis au niveau de l'embouchure du magasin présente une déclivité qui a pour effet de pencher les plaques vers l'avant et faciliter leur saisie.

Une formeuse de caisse est aussi décrite dans FR2563494.

US 5 970 834 A présente un dispositif de chargement pour alimenter des plaques cartonnées.

Dans le domaine de l'invention, il est donc nécessaire d'approvisionner régulièrement un tel poste avec des plaques planes prédécoupées voire prépliées, présentes sur une palette dans l'environnement du poste. Cet approvisionnement se fait généralement manuellement, par un opérateur qui doit alors être affecté audit poste, au risque qu'il charge le magasin de façon excessive pour lui permettre de travailler en parallèle sur d'autres machines.

L'invention vise ainsi à faciliter et automatiser l'approvisionnement en plaques prédécoupées d'un magasin d'alimentation d'une fonction de formage de caisse, magasin dans lequel les plaques sont stockées les unes derrière les autres à peu près verticalement, et ce avec une solution la plus versatile possible, et ainsi compatible sans reconception majeure avec le plus grand nombre de postes possibles, mais aussi capable de traiter un panel très large de plaques, en termes de dimensions, de configuration en lot ou pas, voire de configuration dudit lot.

Pour ce faire, l'invention propose d'alimenter le magasin à l'aide d'un dispositif de chargement automatisé et autonome par rapport au poste alimenté, capable de détecter lui-même l'état du magasin qu'il doit approvisionner, et éventuellement aussi capable, compte tenu de sa compacité, sa puissance et son procédé de saisie, de traiter un très grand éventail de plaques ou lots.

L'invention a ainsi pour objet un dispositif de chargement pour alimenter successivement en plaques cartonnées un poste de traitement par pliage desdites plaques en vue d'en former des caisses de conditionnement, ledit poste de traitement présentant un magasin pour recevoir les plaques successives, éventuellement regroupées en lots, ledit dispositif présentant, quant à lui, un manipulateur comprenant, d'une part, un outil de préhension pour saisir lesdites plaques, et, d'autre part, un actionneur pour déplacer l'outil entre un stock de plaques et le magasin de réception du poste.

Ce dispositif est défini dans la revendication 1.

L'invention a aussi pour objet une méthode mise en oeuvre par ce dispositif, à savoir un procédé de chargement de lots de plaques dans un magasin d'un poste de traitement par pliage desdites plaques en vue d'en obtenir des caisses, comprenant une étape consistant essentiellement à transférer, dans ledit magasin, des plaques depuis un stock, et ce à l'aide d'un manipulateur d'un dispositif de chargement.

Ce procédé est défini dans la revendication 9.

L'invention sera mieux comprise grâce à la description ci-dessous, qui se base sur des modes de réalisations possibles, expliqués de façon illustrative et nullement limitative, en référence avec les figures annexées, dans lesquelles :

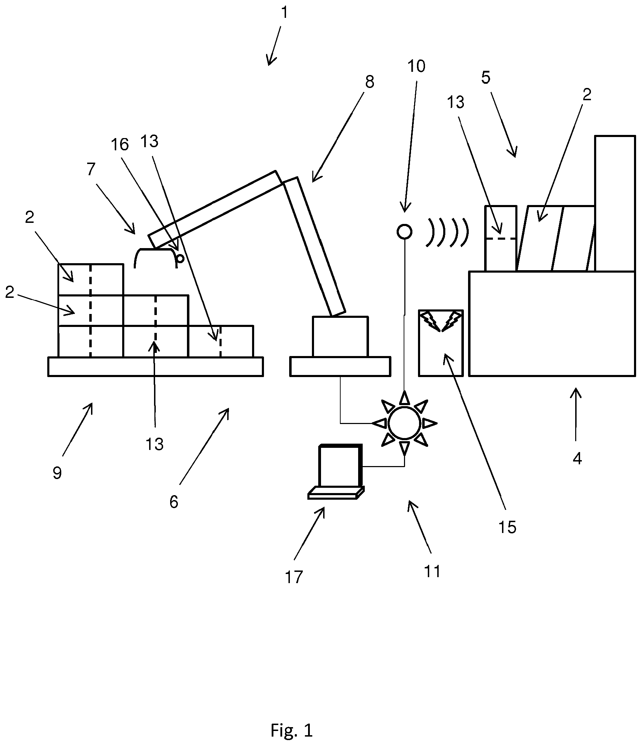

- la figure 1 montre une vue d'ensemble d'un dispositif de chargement, entre un stock et un magasin qu'il alimente ;
- la figure 2 montre une vue de détail d'un outil de préhension ;
- la figure 3 schématise une plaque avec des zones de pliure prédéfinies ;
- la figure 4 montre un détail de l'outil de préhension destiné à couper un éventuel lien autour des lots.

L'invention a donc tout d'abord comme objet un dispositif de chargement 1 pour alimenter successivement en plaques 3 cartonnées un poste 4 de traitement par pliage desdites plaques 3 en vue d'en former des caisses de conditionnement, ledit poste 4 de traitement présentant un magasin 5 pour recevoir les plaques 3 successives, éventuellement regroupées en lots 2, ledit dispositif présentant, quant à lui, un manipulateur 6 comprenant, d'une part, un outil 7 de préhension pour saisir lesdites plaques 3, et, d'autre part, un actionneur 8 pour déplacer l'outil 7 entre un stock 9 de plaques 3 et le magasin 5 de réception du poste 4.

Le poste 4 assure donc au moins une fonction de mise en forme de caisses à partir de plaques 3 de carton essentiellement planes et a un magasin 5 où sont stockées les plaques 3 en attente. Le poste 4 est éventuellement non seulement une telle formeuse de caisse, mais peut aussi assurer la fonction d'encaissage elle-même, c'est-à-dire le transfert de produits, reçus à la chaîne, jusque dans les caisses formées.

Les plaques 3 sont généralement d'un seul tenant et définissent tout ou partie de la caisse future, éventuellement avec des rabats de solidité. C'est par dépliage et pliage que le poste 4 transforme les plaques 3 planes en un volume d'accueil ultérieur pour les produits. Les caisses obtenues ont de façon classique un fond, normalement destiné à être horizontal, puis des côtés normalement destinés à être alors verticaux, perpendiculaire deux à deux. Le fond, voire son couvercle, à l'opposée, peut être obtenu par des rabats s'étendant à partir des côtés. Les différents éléments de la plaque 3 sont généralement fixés entre eux, par collage, bande adhésive, agrafes, ou autres, pour une meilleure stabilité.

On comprend qu'en fonction du débit de produits en entrée du poste 4 de traitement, ce dernier consomme un certain débit de plaques 3, et qu'il est alors nécessaire d'approvisionner régulièrement le magasin 5 du poste 4. Le magasin 5 est approvisionné depuis un stock 9, généralement à proximité du poste 4, au niveau duquel les plaques 3 sont stockées en grande quantité, généralement sous forme d'une palette contenant un grand nombre de plaques 3 empilées. L'invention propose de réaliser l'approvisionnement de ce magasin 5 par un dispositif de chargement 1 qui est autonome et peut être installé pour approvisionner un poste 4 sans modification structurelle de ce dernier.

Le dispositif de chargement 1 présente ainsi un manipulateur 6 comprenant un outil 7 de préhension, et un actionneur 8 qui déplace l'outil 7. L'actionneur 8 est préférablement du type robot multiaxe, au bout duquel l'outil 7 est monté.

C'est donc l'outil 7 qui vient déplacer les plaques 3 depuis le stock 9 et les amener dans le magasin 5. L'outil 7 saisit donc au moins une plaque 3 à chaque fois. Dans des cas préférés, les plaques 3 sont organisés en lots 2 de plaques 3 superposées autoportés, les plaques 3 qui les constituent étant reliées entre elles par un lien 13. Il suffit alors éventuellement que l'outil 7 saisisse une plaque 3 d'extrémité de cette pile pour emmener tout le lot 2. A chaque manoeuvre, le dispositif de chargement 1 dépose donc dans le magasin 5 une plaque 3, et, préférablement un lot 2 de plaques 3. Le poste 4 consomme quant à lui une à une les plaques 3 présentes dans le magasin 5.

Selon l'invention, le dispositif de chargement 1 comprend, d'une part, un moyen de détection 10 pour détecter l'état de remplissage du magasin 5, ainsi que, d'autre part, une unité de contrôle 11, pilotant l'action du dispositif et recevant pour ce faire l'information de détection du moyen de détection 10, ladite unité de contrôle 11 étant indépendante du contrôle du poste 4 et programmable pour adapter le fonctionnement du dispositif de chargement 1 au type de plaques 3 traités.

Le dispositif de chargement 1 comprend donc une unité de contrôle 11 qui pilote le mouvement du manipulateur 6 et le met en marche en fonction des besoins du poste 4 pour approvisionner son magasin 5. Cette unité de contrôle 11 reçoit pour cela un signal émis par un moyen de détection 10 et représentant l'état de remplissage du magasin 5. Le dispositif de chargement 1 est donc autonome et acquiert seul une information représentative de l'état du magasin 5, pour, si nécessaire, le réapprovisionner par une commande adéquate du manipulateur 6. L'unité de contrôle 11 régit le fonctionnement du manipulateur 6 conformément à un programme prédéfini, qui détermine par exemple les seuils à partir desquels commencer ou arrêter d'approvisionner le magasin 5, les dimensions de plaques 3 ou de lot 2 à traiter, ou encore l'endroit exact où l'outil 7 doit saisir la plaque 3 ou le lot 2, la force à exercer, etc.

L'unité de contrôle 11 est propre au dispositif de chargement 1 en ce sens que ce dernier n'est pas piloté par l'organe de pilotage du poste 4. Il est donc aisé de venir intégrer un tel dispositif de chargement 1 sur un poste 4 existant, et les conditions de compatibilité sont limitées. L'unité de contrôle 11 permet aussi de modifier le programme conformément auquel le manipulateur 6 est mis en oeuvre. Il est ainsi possible à un opérateur de modifier les paramètres de fonctionnement du manipulateur 6.

Un tel dispositif de chargement 1 est très versatile puisqu'il peut s'adapter à pratiquement tous les postes 4 existants munis d'un magasin 5, mais il est aussi capable de traiter un grand panel de plaques 3 ou lots 2, ou au moins d'être facilement configuré ou reconfiguré en autonomie pour cela.

L'unité de contrôle 11 peut être un ordinateur muni d'une interface de programmation, par exemple. La communication avec le manipulateur et/ou le moyen de détection 10 peut être avec ou sans fil.

L'unité de contrôle 11 sert donc à piloter le mouvement du manipulateur 6 pour saisir, dès que nécessaire, un lot 2 ou une plaque 3, et l'amener dans le magasin 5.

La programmation des trajectoires entre le stock 9 et le magasin 5 peut se faire lors d'une étape au cours de laquelle un opérateur déplace manuellement l'outil 7 de préhension entre le stock 9 et le magasin 5, le mouvement qu'il fait subir audit outil 7 étant intégralement ou ponctuellement détecté, suivi et enregistré par l'unité de contrôle 11 en tant que trajectoire à reproduire ultérieurement en cours de fonctionnement normal.

On comprendra que le nombre de stock 9 d'où les plaques 3 sont tirées ainsi que le nombre de postes 4 alimentés est quelconque, puisqu'un tel dispositif de chargement 1 peut alimenter un ou plusieurs postes 4 différents, depuis un ou plusieurs stocks 9 différents, qui peuvent éventuellement contenir des plaques 3 de format différents, ou des lots 2 de formats différents. Le moyen de détection 10 est alors adapté à la pluralité de magasins 5 à alimenter. De façon classique, le moyen de détection 10 prend la forme d'une cellule de détection d'objet positionnée dans le magasin 5 à approvisionner et est capable de détecter les plaques 3.

Selon une caractéristique additionnelle possible, l'outil 7 est muni d'un capteur 16 pour détecter les plaques 3, de sorte à pouvoir utiliser ledit outil 7 par balayage pour détecter la forme que prend l'ensemble des plaques 3 dans le stock 9. Les plaques 3 sont en effet empilées dans le stock 9, et il est par conséquent nécessaire d'identifier leur position exacte avant de chercher à les déplacer avec le manipulateur 6. Il est donc proposé de munir directement l'outil 7 d'un capteur 16 détecteur d'objet, sensible à la présence de plaques 3. Le manipulateur 6 peut alors être contrôlé pour que l'outil 7 balaye le volume où les plaques 3 devraient se trouver dans le stock 9. On notera que le capteur 16, monté sur l'outil 7, peut former lui-même le moyen de détection 10. Un seul et même moyen forme alors tant le capteur 16 embarqué sur l'outil 7 que le moyen de détection 10 pour quantifier le contenu du magasin 5.

La zone de détection du capteur 16 est orientée vers l'endroit où devraient se trouver les plaques 3 de façon à détecter la présence des plaques 3 et identifier ainsi leur position. Le manipulateur 6 lui-même est donc utilisé pour caractériser, grâce à l'outil 7 qui assure le balayage requis, le contour occupé par l'ensemble des plaques 3 dans le stock 9. Cette donnée est ensuite envoyée à l'unité de contrôle 11, qui peut en particulier analyser ces résultats et en déduire par exemple les dimensions des plaques 3 et/ou des lots 2. L'unité de contrôle 11 lance ce programme de détection et exploite donc le résultat pour envoyer l'outil 7 chercher les plaques 3 là où elles se trouvent. Ce cycle de surveillance peut être mis en oeuvre au début d'une série, lorsqu'une palette de plaques 3 vient d'être apportée, ou encore en cours de série, pour vérifier la bonne configuration des plaques 3.

Cela contribue à l'autonomie du dispositif de chargement 1 et à sa versatilité par rapport aux environnements techniques possibles.

Selon une autre caractéristique possible de l'invention, l'outil 7 est muni, d'une part, d'une pince 12 pour saisir un éventuel lien 13 retenant ensemble en formant une boucle fermée les plaques 3 d'un même lot 2, et, d'autre part, d'un moyen de découpe 14 pour ouvrir un tel lien 13, le dispositif de chargement 1 comprenant éventuellement, quant à lui, un destructeur 15 de lien 13, pour découper le lien 13 en morceaux.

Comme il a déjà été évoqué, dans certaines configurations, les plaques 3 sont reliées en lot 2 par des liens 13, sous forme de bandes de plastique. Un seul lien 13 est généralement utilisé pour former un lot 2. Ce lien 13 doit évidemment être ôté pour que le poste 4 puisse former les caisses à partir des plaques 3 une à une. Il est ici proposé, dans de tels cas, de charger les lots 2 eux-mêmes dans le magasin 5 et donc d'ouvrir les liens 13 uniquement après ce transfert depuis le stock 9 jusqu'au magasin 5. Afin de conserver un dispositif de chargement 1 simple et capable de traiter des plaques 3 reliées en lots 2, il est donc avantageux de munir directement l'outil 7 d'un moyen de découpe 14 qui pourra, une fois le lot 2 chargé dans le magasin 5, couper le lien 13 et l'ouvrir, pour rendre les plaques 3 indépendantes. La pince 12 prend la forme d'un étau piloté qu'il convient de fermer une fois qu'il entoure le lien 13. Le moyen de découpe 14 présente quant à lui une lame tranchante mobile qui vient couper le lien 13 alors qu'il est pris dans ledit étau.

L'outil 7 a donc une pince 12 pour saisir le lien 13, ainsi qu'un moyen de découpe 14 qui tranche le lien alors qu'il est saisi par la pince 12. Le lien 13 restant saisi par la pince 12, l'outil 7 est déplacé pour dégager le lien 13 des plaques 3, et éventuellement pour l'amener dans une zone où il sera traité et détruit, par exemple en le réduisant en petits morceaux.

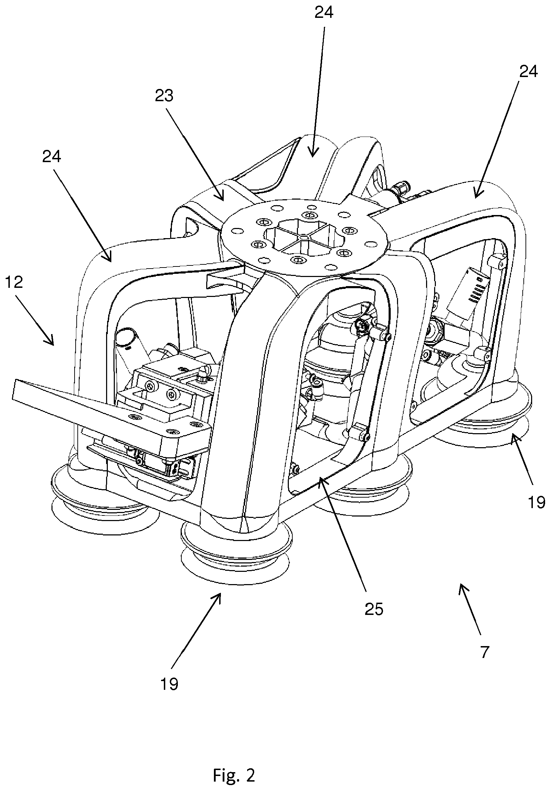

Selon une autre caractéristique additionnelle possible, l'outil 7 est muni d'un ensemble de ventouses 19 pneumatiques pour saisir par le dessus une plaque 3, voire un lot 2. Dans la configuration illustrée en figure 2, l'outil 7 est ainsi muni de ventouses situées à l'extrémité d'une carcasse 23 ou coque structurelle entourant l'essentiel des éléments de l'outil 7 comme les venturis, la pince 12, le moyen de découpe 14 et/ou le capteur 16, et dans laquelle circulent éventuellement les canalisations pour les ventouses 19. Les ventouses 19 sont capables d'exercer une force importante sur la plaque 3 contre laquelle elles sont apposées. Elles sont, en outre, proches les unes des autres de sorte que l'empattement extérieur de l'outil 7 est significativement faible par rapport à la force qu'il peut exercer sur la plaque 3 contre laquelle viennent les ventouses 7. Un tel outil est donc particulièrement versatile puisque capable de traiter des plaques 3 de petites dimensions, à savoir à peine plus grande que l'empattement de l'ensemble compact des ventouses 19 et donc de l'outil 7, jusqu'à de lourds lots 2 de plusieurs plaques 3 de dimensions bien plus grandes que ledit empattement, grâce à la force des ventouses 19.

Le dispositif de chargement 1 est ainsi particulièrement versatile.

Selon une autre caractéristique additionnelle possible du dispositif de chargement 1, il est apte à détecter des intrusions dans l'environnement de travail du manipulateur 6, et altérer en conséquence le fonctionnement de ce dernier, de sorte à éviter des risques de collision avec des opérateurs, ledit dispositif de chargement 1 étant alors dépourvu de carénage restreignant l'accès par les opérateurs à l'environnement de travail dudit robot. Par exemple, la détection des intrusions peut se faire avec un jeu de capteurs dans l'environnement du manipulateur 6 robot, qui envoient à l'unité de contrôle 11 des signaux représentatifs d'une présence détectée dans la zone de travail dudit manipulateur 6, plus ou moins proche. Dès qu'une présence est détectée, le fonctionnement du manipulateur 6 passe en mode dégradé en fonction du risque associé, qui peut aller jusqu'à une mise à l'arrêt complet. Alternativement, le manipulateur 6 lui-même peut être muni de capteurs qui détectent une présence voire un choc ou un contact anormal. Ce signal peut être pris en compte par le manipulateur 6 lui-même ou par l'unité de contrôle 11.

L'avantage de munir le dispositif de chargement 1 d'une telle fonction de sécurité est de pouvoir éliminer les carénages et autres solutions limitant l'accès de la zone de travail du manipulateur 6 aux opérateurs. Un tel dispositif de chargement 1 est alors facile et peu coûteux à installer et mettre en place dans l'environnement d'un poste 4 existant, mais son fonctionnement reste sûr et les risques limités.

L'invention a aussi pour objet un procédé mettant en oeuvre le dispositif tel que décrit ci-dessus, à savoir un procédé de chargement de lots 2 de plaques 3 dans un magasin 5 d'un poste 4 de traitement par pliage desdites plaques 3 en vue d'en obtenir des caisses, comprenant une étape consistant essentiellement à transférer, dans ledit magasin 5, des plaques 3 depuis un stock 9, et ce à l'aide d'un manipulateur 6 d'un dispositif de chargement 1. Comme il a déjà été dit, le stock 9 prend généralement la forme d'une palette sur laquelle sont superposées les plaques 3, éventuellement conditionnées en lots 2, auquel cas les plaques 3 sont transférées par lot 2. Bien entendu, ce procédé peut servir à faire fonctionner le dispositif de chargement 1 pour qu'il alimente plusieurs postes 4 différents, éventuellement avec plusieurs magasins 5 chacun, les plaques 3 provenant éventuellement de plusieurs stocks 9, et ayant donc éventuellement des formats différents. Le dispositif peut donc servir de moyen d'alimentation répartissant différentes plaques 3 sous différentes formes, c'est-à-dire à l'unité ou en lot 2, mais aussi de différents gabarits, depuis plusieurs stocks 9 différents jusque plusieurs magasins différents 5 et agit donc comme une centrale de répartition des plaques 3. Préférablement, le manipulateur 6 reste toutefois ancré au sol et le au moins un stock 9 et le au moins un magasin 5 se trouvent dans la zone d'action ou environnement de travail dudit manipulateur 6.

Selon l'invention, le procédé comprend des étapes consistant essentiellement à détecter l'état de chargement du magasin 5 à l'aide d'un moyen de détection 10 dudit dispositif de chargement 1, et à mettre en oeuvre le manipulateur 6 sur la base de cette détection ainsi que d'un programme prédéfini régi par une unité de contrôle 11 du dispositif de chargement 1 qui ne contrôle pas le fonctionnement du poste 4, en particulier une unité de contrôle 11 dédiée au dispositif de chargement 1, notamment une unité de contrôle 11 qui permet à un utilisateur de modifier ledit programme à l'aide d'un outil de programmation 17 comme un ordinateur, par exemple.

L'unité de contrôle 11 est donc propre au dispositif de chargement 1 et le moyen de détection 10, bien que monté de sorte à détecter la présence de plaques 3 dans le magasin 5, est relié à ladite unité pour lui fournir les informations nécessaires au fonctionnement du manipulateur 6 qui transfert les plaques 3 vers ledit magasin 5, de sorte à en garantir un remplissage optimal.

Selon une caractéristique additionnelle possible du procédé, il comprend, en outre, une étape consistant essentiellement à détecter l'état de chargement du stock 9 à l'aide du manipulateur 6 lui-même, par déplacement d'un capteur 16 embarqué sur un outil 7 monté sur un actionneur 8 du manipulateur 6. Cette étape est mise en oeuvre au début du cycle de fonctionnement, lorsqu'une palette entièrement ou partiellement pleine est amenée au stock 9, voire au cours de la production pour vérifier l'état du stock 9, ou encore pour confirmer le gabarit des plaques 3, en particulier des lots 2 eux-mêmes. Ce signal représentant l'état de remplissage du stock 9 est donc pris en compte par l'unité de contrôle 11 régissant le déplacement du manipulateur 6, pour décider notamment de l'endroit exact où l'outil 7 doit venir chercher les plaques 3 ou les lots 2, mais aussi, éventuellement, pour exécuter une procédure d'alerte dès lors qu'un défaut est détecté dans le stock 9, du type stock 9 vide ou plaques 3 tombées, etc.

Selon une autre caractéristique additionnelle possible du procédé, il comprend, en outre, une étape consistant essentiellement à ouvrir un lot 2 de plaques 3, en coupant un lien 13 longiligne qui retient ensemble les plaques 3 dudit lot 2, et ce à l'aide d'un moyen de découpe 14 embarqué sur le ou un outil 7 monté sur le ou un actionneur 8 du manipulateur 6. Le transfert des plaques 3 vers le magasin 5 se fait alors par lot 2, ce qui réduit bien entendu la fréquence des transferts. Il n'est toutefois pas nécessaire que l'opérateur intervienne pour ouvrir le lien 13, et, comme le moyen de découpe 14 est monté sur l'outil 7 et donc intégré au dispositif de chargement 1, il n'est pas nécessaire de compléter l'installation avec un dispositif supplémentaire.

Dans des modes de réalisations possibles, où les produits 3 se présentent en lot 2 dans le stock 9, plusieurs lots 2 munis de liens 13 sont déposés successivement dans le magasin 5, l'étape d'ouverture de lot 2 n'étant pas mise en oeuvre pour le dernier lot 2 déposé. Ainsi, au moins le dernier lot 2 déposé dans le magasin 5 forme un bloc de plaques 3 maintenues entre elles et qui ne risquent donc pas de glisser jusqu'à s'étaler à plat dans le magasin 5 où elles doivent normalement être orientées à peu près verticalement. Ce bloc-là est donc relativement stable par rapport à un même nombre de plaques 3 non reliées entre elles, et stabilise alors les plaques 3 en amont, qui peuvent alors être libérées les unes des autres par l'ouverture des liens 13 de leurs lots 2 respectifs.

Préférablement, c'est à l'occasion de la dépose dans le magasin 5 d'un nouveau lot 2 que le lien 13 du lot 2 précédent est coupé, de sorte que seul le dernier lot 2 dans le magasin 5 est fermé par un lien 13.

Comme le moyen de découpe 14 est monté sur l'outil 7 et que ce dernier est présent dans le magasin 5 puisqu'il vient d'y déposer le dernier lot 2, il est relativement rapide de déplacer l'outil 7 jusqu'au lot 2 précédent pour en ouvrir le lien 13.

Enfin, selon une autre caractéristique avantageuse, le dispositif de chargement 1 comprend un manipulateur 6, muni d'un actionneur 8 ainsi que d'un outil 7 de préhension à son extrémité, l'outil 7 de préhension comprenant un ensemble de ventouses, la saisie du lot 2 se faisant en positionnant l'outil 7 sensiblement au milieu entre les deux grands bords des plaques 3, au niveau du bord court éloigné d'une zone de pliure de la plaque 3. Le programme prédéfini de l'unité de contrôle 11 positionne donc à cet endroit l'outil 7, une fois déterminés l'état du stock 9 et donc la position exacte de la pile de plaques 3 rectangulaires, ainsi que les dimensions des plaques 3. Il a en effet été constaté qu'en saisissant la plaque 3 du dessus à cet endroit, sa déformation lorsqu'elle se trouve dans un lot 2 formé par un lien 13, est alors minimisée. Ce positionnement de l'outil 7 contribue à la versatilité du dispositif de chargement 1 qui peut alors soulever sans dégradation excessive des plaques 3 ou lots 2. Ce positionnement est ainsi privilégié pour les différentes configurations de plaques 3 possibles.

Selon une autre caractéristique additionnelle possible, au cours du trajet entre le stock 9 et le magasin 5, le lot 2 est amené au moins temporairement en appui sur un support extérieur par rapport auquel il est ensuite déplacé, par rotation et/ou translation. En effet, dans les cas où le manipulateur 6 saisit des lots 2 reliés chacun par un lien 13, la saisie par la plaque supérieure 3 amène cette dernière à se déformer par rapport aux autres qu'elle entraîne sous elle grâce au lien 13. Le programme de l'unité de contrôle 11 tient alors préférablement compte des dimensions des plaques 3 et/ou du lot 2 pour adapter la trajectoire du lot 2 entre le stock 9 et le magasin 5 de sorte à minimiser la déformation de la première plaque 3, et/ou minimiser la déformation de tout le lot 2. Des rotations autour d'un axe horizontal peuvent ainsi être prévues lors du trajet, ou encore la dépose du lot 2 dans le magasin 5 suivie de mouvements de rotations de repositionnement du lot 2. Le lot 2 peut être amené en appui sur une surface support, au niveau d'une tranche ou d'un côté, puis être pivoté ou translaté, ce qui permet aussi de retasser le lot 2 et repositionner ainsi les plaques 3 les unes contre les autres, alignées.

Dans le mode de réalisation illustré aux figures annexées, le dispositif de chargement 1 comprend un manipulateur 6 avec, d'une part, un actionneur 8 du type robot à bras articulés, et, monté à l'extrémité d'un de ces bras, un outil 7 de préhension. Le dispositif de chargement 1 est monté pour agir entre, d'une part, une zone où se trouve un stock 9 de lots 2 de plaques 3, et, d'autre part, un magasin 5 d'un poste 4. Le poste 4 assure donc au moins une fonction de formage de caisses à partir de plaques 3 voire aussi une fonction d'encaissage c'est-à-dire de placement des produits au sein de la caisse formée.

Les plaques 3 sont donc conditionnées initialement en lots 2, posées les unes sur les autres, et préférablement reliées entre elle par un lien 13 souple fermé qui les maintient ensemble en un bloc. Ce bloc est plus ou moins rigide, en fonction de la rigidité des plaques 3 constitutives et du jeu entre le lien 13 et les plaques 3 du lot 2. Ces lots 2 peuvent comprendre quelques plaques 3 voire plusieurs dizaines, superposées et les unes contre les autres. Les lots 2 sont ainsi posés sur une palette, formant un stock 9 d'entrée. On comprend qu'une palette peut être chargée de plusieurs couches comprenant, chacune, plusieurs lots 2 les uns à côté des autres. Les lots 2 sont ensuite chargés par le dispositif de chargement 1 dans le magasin 5 du poste 4. Une caisse cartonnée est érigée par le poste 4 à partir de chaque plaque 3 prise individuellement. Le poste 4 consomme donc successivement les plaques 3 des lots 2 présents dans son magasin 5. Ce dernier est généralement pourvu d'un tapis transporteur qui avance successivement les lots 2 ou les plaques 3 jusqu'à la zone de prise par le poste 4. Une étape ultérieure au sein du poste 4 peut être l'encaissage, c'est-à-dire le remplissage, avec des produits du type flacon, bouteille, ou autres, des caisses formées à l'aide des plaques 3.

Le dispositif de chargement 1 a donc pour fonction essentielle de transférer les lots 2 du stock 9 jusqu'au magasin 5, et ce de sorte à assurer que le magasin 5 soit toujours alimenté pour que le poste 4 puisse fonctionner sans discontinuité.

Le dispositif de chargement 1 peut bien entendu servir à alimenter plusieurs postes 4 différents, éventuellement à partir d'un même stock 9. Le dispositif de chargement 1 est alors apte à charger plusieurs magasins 5 et donc plusieurs postes 4 différents, à partir d'un ou plusieurs stocks 9.

Les plaques 3 sont déposées à l'unité ou par lot 2 depuis le stock 9, et le manipulateur 6 est muni d'un outil 7 de préhension compatible avec les caractéristiques de poids et dimensions de l'objet à transporter : lot 2, pile de plaques 3, plaque 3, etc. Comme il sera décrit plus loin, un outil 7 à base de ventouse est privilégié, les lots 2 étant saisis par le dessus, au niveau de leur plaque 3 supérieure, à l'opposé de celle avec laquelle le lot 2 est en contact avec celui sous lui. De façon générale, des outils 7 à pince peuvent aussi être utilisés, les lots 2 étant saisis par leur côté.

Le dispositif de chargement 1 comprend préférablement aussi, d'une part, un moyen de détection 10, et, d'autre part, une unité de contrôle 11. Le moyen de détection 10 sert à suivre l'état de remplissage du magasin 5 et à fournir cette information à l'unité de contrôle 11 qui assure le pilotage du dispositif de chargement 1, en particulier le mouvement du manipulateur 6. L'unité de contrôle 11 du dispositif de chargement 1 est déconnectée du poste 4, et, à la différence d'une centrale de pilotage qui serait commune tant au dispositif de chargement 1 qu'à la au moins une machine ou poste recevant les plaques 3, l'unité de contrôle 11 ne permet pas d'assurer aussi le pilotage du poste 4. Le poste 4 est ainsi muni de sa propre centrale de commande, qui en conditionne le fonctionnement sur la base d'une logique de traitement ainsi que de différents capteurs dont elle est munie. La centrale de commande du poste 4 n'assure donc préférablement pas le fonctionnement du dispositif de chargement 1 et n'est donc pas reliée à lui. L'unité de contrôle 11 du dispositif de chargement 1 est donc apte à piloter le fonctionnement du dispositif de chargement 1, mais pas le fonctionnement du poste 4. Inversement, la centrale de commande du poste 4 ne pilote pas le fonctionnement du dispositif de chargement 1.

L'unité de contrôle 11 est donc indépendante du poste 4, et le dispositif de chargement 1 forme un module autonome qui peut aisément être rajouté sur un poste 4 existant, sans en modifier l'organe de pilotage, sans reprogrammation ou autres. En cas de besoin pour le bon fonctionnement du dispositif de chargement 1 et du poste 4, des échanges d'information entre l'unité de contrôle 11 et la centrale de commande du poste 4 peuvent être mis en place. Par exemple, une information représentant le nombre de plaques 3 requises pour un cycle complet de production par le poste 4 peut être prise en compte par l'unité de contrôle 11 de sorte à éviter de remplir le magasin 5 au-delà de la quantité qui sera effectivement utilisée pendant ce cycle de fabrication. On évite ainsi de surcharger le magasin 5 et d'être amené éventuellement à jeter des plaques 3 présentes dans le magasin 5 une fois le cycle de fabrication terminé. Il est aussi possible, à l'inverse, d'anticiper le changement de format et de transférer assez tôt le nombre de plaques 3 encore requis pour le cycle de fabrication, ce qui permet de dégager plus tôt la palette, alors même que le cycle de fabrication n'est pas encore fini.

Le dispositif de chargement 1 est préférablement muni d'un moyen de détection 10 pour mesurer l'état de remplissage du au moins un magasin 5 qu'il alimente. Il peut par exemple s'agir d'un détecteur de proximité orienté vers la zone où les lots 2 et plaques 3 sont les uns contre les autres et qui vient éventuellement être positionné au sein du magasin 5. Il peut aussi s'agir d'un capteur 16 monté sur l'outil 7. On comprendra bien sûr que si le dispositif de chargement 1 doit alimenter plusieurs postes 4, la mesure s'effectue dans chaque magasin 5 et le moyen de détection 10 est adapté et comprend alors le nombre de cellules nécessaire. Le moyen de détection 10 est connecté à l'unité de contrôle 11 qui reçoit un signal correspondant à la quantité de plaques 3 présente dans le au moins un magasin 5 à remplir. L'unité de contrôle 11 utilise ensuite ce signal pour mettre en oeuvre le manipulateur 6 et amener de nouveaux lots 2 de plaques 3 dans le magasin 5, conformément à une logique de traitement, du type déclenchant un transfert vers le magasin 5 dès lors que la quantité de plaques 3 se trouve entre deux seuils prédéfinis, etc. Eventuellement, le signal représentant la quantité de plaques 3 dans le magasin 5 pourrait aussi provenir d'un équipement du poste 4 lui-même, voire de sa propre unité de commande.

Le dispositif de chargement 1 est donc piloté de façon autonome et son programme peut être préférablement modifié par un utilisateur à l'aide d'un outil de programmation 17 dont dispose ledit dispositif de chargement 1. Une telle modification du fonctionnement peut par exemple être effectuée avec un ordinateur. Grâce à cet outil de programmation 17, le fonctionnement du dispositif de chargement 1 peut être modifié pour tenir compte d'un nouveau format de plaque 3, par exemple, voire de lot 2 ou même de nouvelles dimensions et/ou d'un nouvel arrangement du stock 9. Là encore, on notera que cet outil de programmation 17 est préférablement autonome par rapport au poste 4, ce qui permet au dispositif de chargement 1 d'être contrôlé indépendamment des capacités de pilotage du poste 4.

L'outil de programmation 17 permet ainsi de sélectionner parmi un ensemble de programmes prédéfinis, voire aussi de définir un nouveau programme grâce à une interface dont il est pourvu.

On notera qu'un tel dispositif de chargement 1 est donc indépendant de la construction du poste 4, puisqu'il est apte de façon autonome à obtenir l'information qui lui est nécessaire quant à l'état du magasin 5. Il ne nécessite donc pas d'être relié à un contrôleur externe, et peut donc être aisément ajouté sur un poste 4 existant quelconque, sans le modifier. L'outil de programmation 17 rajoute à cette versatilité la possibilité de modifier le fonctionnement du manipulateur 6 pour tenir compte de nouveaux formats de lots 2, en termes de dimensions de plaques 3, de nombres de plaques 3 dans un lot 2, la présence ou non d'intercalaires, etc.

La connaissance de l'état du stock 9, tant en termes de quantité qu'en termes de position des lots 2, est accessible dès lors que le fonctionnement du manipulateur 6 est suivi, étape par étape. Néanmoins, il reste nécessaire de pouvoir identifier, au démarrage d'un cycle de transfert vers le magasin 5, la configuration exacte du stock 9. Ce stock 9 est en effet généralement un ensemble de lots 2 ou plaques 3 sur palette, amenée par un opérateur. La position de la palette ainsi que la position des lots 2 sur la palette peut donc varier. En outre, il est possible d'être amené à arrêter une production alors que le stock 9 n'est pas vidé, pour changer de format, par exemple. Dans ce cas, la palette et son contenu restant sont dégagés, puis réutilisés ultérieurement, au cours d'un nouveau cycle de fabrication. Ainsi, de façon générale, au démarrage d'un nouveau cycle, les lots 2 dans le stock 9 peuvent avoir une configuration inconnue. Il est donc nécessaire de commencer le cycle de fourniture au magasin 5 par l'identification de la configuration géométrique du stock 9. Pour ce faire, il est proposé d'utiliser directement le manipulateur 6 lui-même.

Ainsi, le manipulateur 6 est muni d'un capteur 16 au niveau de l'outil 7, et, au démarrage du cycle, une étape de détection de l'état du stock 9 est mise en oeuvre, au cours de laquelle l'outil 7, et donc le capteur 16 qu'il porte, est déplacé pour balayer l'espace destiné au stock 9 et détecter ainsi le volume occupé par le stock 9, et donc pour déterminer où se trouvent les lots 2 à saisir. Le capteur 16 peut être un capteur de proximité, par exemple à rayon laser, type capteur d'objets. Il est préférablement orienté vers l'opposé de la partie de fixation de l'outil 7 à l'actionneur 8.

Grâce au balayage du stock 9 par le capteur 16, on peut éventuellement aussi quantifier les dimensions d'un lot 2 unitaire. Alternativement, ces valeurs peuvent être spécifiées par un utilisateur, voire simplement choisies parmi plusieurs dimensions possibles. L'outil 7 assure donc aussi dans ces cas une fonction de détection du stock 9 à traiter. On notera ici que le contour détecté par le capteur 16 peut ensuite être comparé à une configuration attendue pour le format, et une éventuelle incohérence, provenant par exemple d'une erreur de fourniture, peut être détectée et signalée.

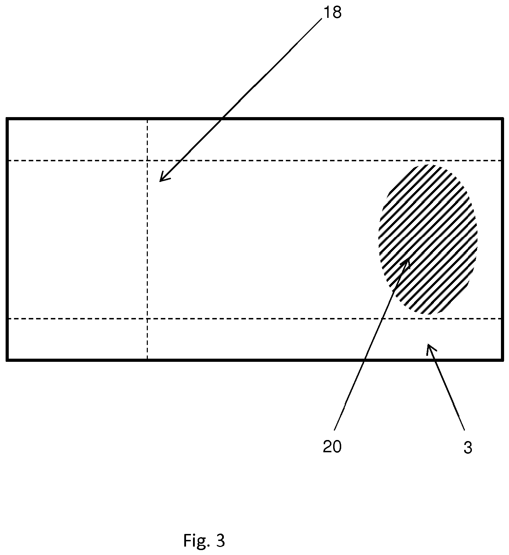

Les plaques 3 étant destinées à former des caisses par pliage, elles présentent généralement des zones de pliage 18 linéaires, éventuellement prévues pour un pliage facilité, comme des lignes de prépliage. La base des caisses à former est généralement rectangulaire, et la zone de pliage 18 s'étend linéairement perpendiculairement à cette base, le long de ces côtés qui sont alors verticaux si la base est horizontale. En configuration pliée, la plaque 3 est formée par les côtés de la future caisse, voir figure 3, à partir desquels s'étendent les flans qui formeront le fond. La zone de pliage 18 linéaire s'étend alors entre deux côtés de la caisse perpendiculaires entre eux, et donc entre deux bords de la plaque 3 qui lui sont parallèles et qui formeront les tranches de la caisse formée, éventuellement plus proche d'un bord que de l'autre pour les configurations de caisse à base rectangulaire non carrée.

Comme il a été déjà précisé, les lots 2 de plaques 3 peuvent présenter un lien 13 qui maintient entre elles ces plaques 3. Vu selon la figure 3, ce lien 13 peut être, par rapport à la zone de pliage 18, et donc aux segments qui formeront les bords perpendiculaires à la base de la caisse, soit parallèle et donc de haut en bas dans la figure 3, ou perpendiculaire, et donc de gauche à droite. Une fois le lot 2 déposé dans le magasin 5 sa partie la plus longue peut ainsi être soit verticale soit horizontale.

Comme le montre la figure 2, l'outil 7 présente préférablement un jeu de ventouses 19 qui forment ensemble une surface à partir de laquelle le manipulateur 6 saisit les lots 2. Lors de la manoeuvre consistant à prendre un lot 2 pour le soulever, il est alors préférable de venir appliquer l'outil 7 dans une zone de prise 20 qui se situe essentiellement entre la zone de pliage 18 et le bord des plaques 3 parallèle le plus éloigné, préférablement à égale distance entre les deux bords perpendiculaires. En saisissant de cette manière la plaque supérieure 3 du lot 2, on limite la déformation de la première plaque 3 sous l'effet du poids du lot 2 lors du transfert vers le magasin 5, et de façon générale, la déformation du lot 2. Une telle déformation est généralement suivie d'une dégradation des caractéristiques mécaniques de la plaque 3, par pliage des zones de pliage 18 dans le sens inverse ou encore par écrasement provoqué par le lien 13. En outre, les avantages d'une telle zone de prise 20 se retrouvent pour des plaques 3 de quasiment toutes les dimensions. La saisie au niveau d'une telle zone de prise 20 contribue donc à la versatilité du dispositif de chargement 1, puisque la même logique de réglage de la prise peut être utilisée à chaque fois.

Bien entendu, il est préférable de déplacer les plaques 3 du stock 9 vers le magasin 5 alors qu'elles sont encore maintenues ensemble par un lien 13, qu'il convient alors d'ouvrir pour que les plaques 3 du lot 2 puissent être utilisées l'une après l'autre.

Pour ce faire, le dispositif de chargement 1 dispose préférablement d'un moyen de découpe 14, qui permet d'ouvrir un tel lien 13 cerclant les plaques 3 en un lot 2. Le moyen de découpe 14 est avantageusement monté sur l'outil 7 lui-même, de sorte que ce dernier assure aussi une fonction d'ouverture du lien 13, puis, comme décrit plus loin, de dégagement jusqu'à un destructeur 15.

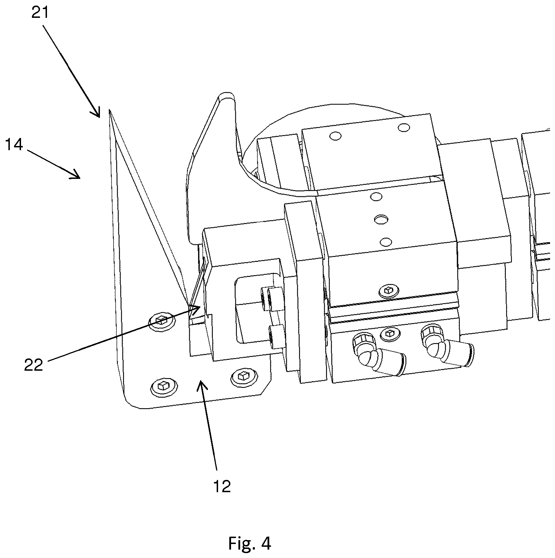

Le moyen de découpe 14 comprend une pince 12 qui peut retenir le lien 13 une fois coupé. Comme le montre la figure 4, le moyen de découpe 14 présente aussi un bec 21 pointu pour venir entre le lien 13 et le lot 2, ce bec 21 formant éventuellement une mâchoire de la pince 12. Le moyen de découpe 14 comprend aussi une lame 22 mobile. Pour l'opération de découpe du lien 13, l'outil 7 est donc déplacé de sorte que le bec 21 vienne s'insérer par sa partie d'extrémité entre le lien 13 et le lot 2, puis la pince 12 est actionnée pour saisir le lien 13. La lame 22 mobile est ensuite déplacée pour trancher le lien 13. L'outil 7 peut ensuite être déplacé et emmener avec lui le lien 13, serré dans la pince 12.

Avantageusement, le dispositif de chargement 1 comprend aussi un destructeur 15 de lien 13, où l'outil 7 vient lâcher le lien 13. Un tel destructeur 15 de lien 13, situé dans l'aire de circulation du manipulateur 6, permet de débiter le lien 13 en une pluralité de segments plus petits, ce qui facilite le stockage des liens 13 découpés au fur et à mesure d'un cycle.

En outre, avantageusement, le moyen de découpe 14 est monté sur un amortisseur, éventuellement du type vérin, qui évite que le mouvement du manipulateur 6 ne dégrade le lot 2 en exerçant sur lui une pression excessive lorsqu'il vient approcher puis insérer le bec 21 sous le lien 13.

Les étapes se succèdent préférablement de la façon suivante. Si le signal du moyen de détection 10 reçu par l'unité de contrôle 11 correspond à une situation dans laquelle des lots 2 doivent être apportés, l'outil 7 s'approche du prochain lot 2 dans le stock 9, le saisit, puis le déplace jusqu'au magasin 5 pour l'y déposer sur le tapis, provoquant éventuellement l'avance des plaques 3. Il est toutefois préférable de conserver l'éventuel lien 13 autour du lot 2 qui vient d'être déposé. Le poids du lot 2 et la cohésion que lui apporte le lien 13 permettent au lot 2, tant que le lien 13 retient les plaques 3 entre elles, d'être utilisé comme un poids assurant que les plaques 3 en aval dans le processus de traitement par le poste 4 ne glissent pas. En effet, les plaques 3 ont une orientation généralement verticale dans le magasin ce qui peut facilement amener à des chutes si les plaques 3 peuvent glisser sur le tapis à partir duquel ils s'étendent normalement à peu près verticalement. Une fois le lien 13 ôté, les plaques 3, disposées essentiellement verticalement les unes contre les autres, sont libres de glisser sous l'effet de la pesanteur au sein même du magasin 5, si elles ne sont pas retenues

En conservant au moins le dernier lot 2 maintenu par le lien 13, il est alors possible de prévoir que le poste 4 soit dépourvu d'un équipement dédié à former une butée en amont pour la pile de plaques 3 dans le magasin 5. Un lot 2 dont les plaques sont encore retenues par le lien 13 peut ainsi être utilisé à l'extrémité de la colonne de plaques 3 au sein du magasin 5 pour éviter que les plaques en aval ne glissent et pour garantir ainsi leur position. Le dispositif de chargement 1 ne coupe donc préférablement pas le lien 13 du lot 2 qu'il vient de déposer et qui forme l'extrémité de la colonne de plaques 3 dans le magasin 5. Avantageusement, c'est après avoir déposé un lot 2, et que l'outil 7 se trouve donc au niveau du magasin 5, qu'il est manoeuvré pour être amené au lot 2 précédent et en ôter le lien 13. En fonctionnement normal, il y a donc toujours au moins un lot 2 autoporté et stable pour retenir les plaques 3 en aval. Cela permet de simplifier le magasin 5 et donc le poste 4. Dans une séquence de chargement, il est donc envisageable que l'outil 7 embarque un lot 2, le dépose dans le magasin 5 encore fermé par le lien 13, puis aille libérer de son lien 13 le lot 2 précédent en le coupant et l'embarquant ensuite éventuellement jusqu'au destructeur 15.

La figure 2 montre une réalisation possible de l'outil 7 de préhension. Cet outil 7 est destiné à être monté à l'extrémité d'un actionneur 8 du type robot multi-axes et présente, pour entraîner les lots 2, un ensemble de ventouses 19. Ces ventouses sont préférablement au nombre de six, disposées de façon compacte en un rectangle. En utilisant une configuration compacte de ventouses 19 pouvant assurer un effort de traction élevé, on obtient un outil 7 versatile, d'une part, car d'encombrement réduit, puisque les ventouses 19 sont proches les unes des autres et l'outil 7 peut donc venir sur des lots 2 à peine plus grands que la configuration que forme l'ensemble des ventouses 19, et, d'autre part, car apte à créer la force nécessaire pour soulever un lot 2 de nombreuses plaques 3 de grandes dimensions. L'arrangement compact de ventouses 19 puissantes contribue donc à la versatilité de l'outil 7.

Ces ventouses 19 sont alimentées en dépression par un système de venturis, chaque ventouse 19 disposant de son propre venturi.

L'outil 7 présente une carcasse 23 mécanique servant à embarquer les composants de l'outil 7. Cette carcasse 23 porte l'interface de montage sur l'actionneur 8 et prend préférablement la forme d'une structure à arches 24, s'étendant pour chacune depuis l'interface de montage jusqu'à une ventouse 19. Les arches 24 s'étendent, pour partie, perpendiculairement au plan dans lequel se trouvent les ventouses 19, puis, pour une autre partie, sensiblement parallèlement à ce plan jusqu'à l'interface de montage. Les ventouses 19 étant positionnées en se trouvant respectivement aux sommets d'un rectangle ainsi qu'au milieu de ses bords les plus longs, les arches 24 s'étendent en deux groupes parallèles de trois alignés. Un renfort 25 de forme rectangulaire rejoint successivement les extrémités des arches 24 où se trouvent les ventouses 19. Les arches 24 forment donc les contours d'un volume d'outil 7.

L'empattement de l'outil 7, vu sur la plaque 3 lorsqu'il la saisit, correspond préférablement essentiellement à celui de la carcasse 23. Cela signifie que l'essentiel des éléments de l'outil 7 se trouve dans le volume intérieur de la carcasse 23. Bien entendu, certains éléments de l'outil 7 doivent dépasser de la carcasse 23, au moins momentanément, comme la pince 12 qui doit interagir avec les liens 13, ou le bec 21 qui doit s'insérer entre un lien 13 et un lot 2. Le fait que la carcasse 23 accueille dans son volume intérieur l'essentiel des éléments fonctionnels de l'outil 7 a aussi pour résultat de protéger lesdits éléments : venturi et composants pneumatiques associés, filtres, etc., capteur 16, base du moyen de découpe 14, amortisseur dudit moyen de découpe 14, et autres.

Enfin, dans le but de pouvoir facilement rajouter un dispositif de chargement 1 à un poste 4 déjà existant, il est aussi possible que le manipulateur 6 soit sensible aux éléments de son environnement et ainsi capable de détecter une présence afin d'anticiper les chocs dans sa zone de travail. L'accès à la zone de travail du manipulateur 6 est alors possible sans risque pour un opérateur, et le dispositif de chargement 1 peut être dépourvu de carénage sécurisé et empêchant l'accès. Différentes solutions peuvent être mises en oeuvre comme un fonctionnement altéré si le dispositif de chargement 1 détecte une présence à proximité de l'aire de travail, voire un arrêt complet dès que la présence est détectée dans l'aire de travail, ou encore une mise à l'arrêt rapide en cas de détection de choc imprévu, etc. Cette prévention de risques est aussi possible à l'aide d'un jeu de détecteurs identifiant une intrusion dans la zone de travail du manipulateur 6, et envoyant ce signal à l'unité de contrôle 11, qui peut alors faire passer ledit manipulateur 6 dans un mode de fonctionnement dégradé dans lequel les risques pour un opérateur sont nuls. Un dispositif de chargement 1 dépourvu de carénage de protection est particulièrement simple à rajouter sur un poste 4 déjà existant, et reste sécuritaire et peu onéreux.

Grâce à l'invention, il est ainsi possible de proposer une solution autonome de chargement de magasin 5 de poste 4 de formage de caisse qui soit facile à rajouter sur tout type de poste 4, sans en nécessité une reconception majeure, et particulièrement versatile. Un dispositif de chargement 1 selon l'invention est facile à adapter à différents formats de lots 2 ou de plaques 3, ainsi qu'à différents types de poste 4, ce qui en fait un module standard.

La portée de l'invention est définie par les revendications.

## Revendications

1. Dispositif de chargement (1) pour alimenter successivement en plaques (3) cartonnées un poste (4) de traitement par pliage desdites plaques (3) en vue d'en former des caisses de conditionnement, ledit poste (4) de traitement présentant un magasin (5) pour recevoir les plaques (3) successives, éventuellement regroupées en lots (2), ledit dispositif présentant, quant à lui, un manipulateur (6) comprenant, un outil (7) de préhension pour saisir lesdites plaques (3), et un actionneur (8) pour déplacer l'outil (7),
dispositif **caractérisé en ce que**
l'outil (7) est muni, d'une part, d'une pince (12) pour saisir un éventuel lien (13) retenant ensemble en formant une boucle fermée les plaques (3) d'un même lot (2), et, d'autre part, d'un moyen de découpe (14) pour ouvrir un tel lien (13).

2. Dispositif de chargement (1) selon la revendication 1, où la pince (12) prend la forme d'un étau piloté.

3. Dispositif de chargement (1) selon l'une quelconque des revendications 1 ou 2, où
le moyen de découpe (14) présente un bec (21) pointu pour venir entre le lien (13) et le lot (2).

4. Dispositif de chargement (1) selon la revendication 3, où le bec (21) forme une mâchoire de la pince (12).

5. Dispositif de chargement (1) selon l'une quelconque des revendications précédentes, où
le moyen de découpe (14) présente quant à lui une lame tranchante mobile (22).

6. Dispositif de chargement (1) selon l'une quelconque des revendications précédentes, où
le moyen de découpe (14) est monté sur un amortisseur, éventuellement du type vérin.

7. Dispositif de chargement (1) selon l'une quelconque des revendications précédentes,
**caractérisé en ce qu'**il comprend un destructeur (15) de lien (13).

8. Dispositif de chargement (1) selon l'une quelconque des revendications précédentes, où
l'actionneur 8 est préférablement du type robot multiaxe, au bout duquel l'outil 7 est monté.

9. Procédé de chargement de lots (2) de plaques (3) dans un magasin (5) d'un poste (4) de traitement par pliage desdites plaques (3) en vue d'en obtenir des caisses, comprenant une étape consistant essentiellement à transférer, dans ledit magasin (5), des plaques (3) depuis un stock (9),
**caractérisé en ce qu'**il comprend une étape d'opération de découpe consistant à ouvrir un lot (2) de plaques (3), en coupant un lien (13) longiligne qui retient ensemble les plaques (3) dudit lot (2), et ce à l'aide du moyen de découpe (14) embarqué sur l'outil (7) monté sur l'actionneur (8) du manipulateur (6) du dispositif de chargement (1) selon l'une quelconque des revendications précédentes

10. Procédé de chargement selon la revendication 9, **caractérisé en ce que**
pour l'opération de découpe du lien (13), l'outil (7) est déplacé de sorte que le bec (21) présent sur le moyen de découpe (14) vienne s'insérer par sa partie d'extrémité entre le lien (13) et le lot (2), puis la pince (12) est actionnée pour saisir le lien (13) ;
la lame (22) mobile présente sur le moyen de découpe (14) est ensuite déplacée pour trancher le lien (13).

11. Procédé de chargement selon la revendication 9 ou 10, **caractérisé en ce que**
l'outil (7) est déplacé et emmène avec lui le lien (13), serré dans la pince (12).

12. Procédé de chargement selon l'une quelconque des revendications 9 à 11, **caractérisé en ce que**
l'outil (7) vient lâcher le lien (13) dans le destructeur (15) que comprend le dispositif de chargement (1).

13. Procédé de chargement selon l'une quelconque des revendications 9 à 12, où
plusieurs lots (2) munis de liens (13) sont déposés successivement dans le magasin (5), l'étape d'ouverture de lot (2) n'étant pas mise en oeuvre pour le dernier lot (2) déposé.

## Patentansprüche

1. Beschickungsvorrichtung (1) zum sukzessiven Zuführen von Kartonplatten (3) zu einer Station (4) zur Bearbeitung der Platten (3) durch Falten, um daraus Verpackungskisten zu bilden, wobei die Bearbeitungsstation (4) ein Magazin (5) zur Aufnahme der aufeinanderfolgenden Platten (3) aufweist, die eventuell zu Chargen (2) zusammengefasst sind, wobei die Vorrichtung ihrerseits einen Manipulator (6) aufweist, der ein Greifwerkzeug (7) zum Greifen der Platten (3) und einen Aktor (8) zum Bewegen des Werkzeugs (7) umfasst, Vorrichtung, **dadurch gekennzeichnet, dass** das Werkzeug (7) einerseits mit einer Zange (12) zum Greifen eines eventuellen Verbindungselements (13), das die Platten (3) einer gleichen Charge (2) zusammenhält und dabei einen geschlossenen Kreis bildet, und andererseits mit einem Schneidemittel (14) zum Öffnen dieser Verbindung (13) versehen ist.

2. Beschickungsvorrichtung (1) nach Anspruch 1, wobei die Zange (12) die Form eines gesteuerten Schraubstocks annimmt.

3. Beschickungsvorrichtung (1) nach einem der Ansprüche 1 oder 2, wobei das Schneidemittel (14) eine spitze Spitze (21) aufweist, um zwischen das Verbindungsmittel (13) und die Charge (2) zu gelangen.

4. Beschickungsvorrichtung (1) nach Anspruch 3, wobei die Spitze (21) eine Backe der Zange (12) bildet.

5. Beschickungsvorrichtung (1) nach einem der vorangehenden Ansprüche, wobei das Schneidemittel (14) seinerseits eine bewegliche Schneideklinge (22) aufweist.

6. Beschickungsvorrichtung (1) nach einem der vorangehenden Ansprüche, wobei das Schneidemittel (14) auf einem Stoßdämpfer, eventuell vom Typ eines Zylinders, montiert ist.

7. Beschickungsvorrichtung (1) nach einem der vorangehenden Ansprüche, **dadurch gekennzeichnet, dass** sie einen Zerstörer (15) für das Verbindungsmittel (13) umfasst.

8. Beschickungsvorrichtung (1) nach einem der vorangehenden Ansprüche, wobei der Aktor 8 vorzugsweise vom Typ eines mehrachsigen Roboters ist, an dessen Ende das Werkzeug (7) montiert ist.

9. Verfahren zum Zuführen von Chargen (2) von Platten (3) zu einem Magazin (5) einer Station (4) zur Bearbeitung der Platten (3) durch Falten, um daraus Kisten zu erhalten, umfassend einen Schritt, der im Wesentlichen darin besteht, Platten (3) aus einem Lager (9) in das Magazin (5) zu überführen,
**dadurch gekennzeichnet, dass** es einen Schneidvorgangsschritt umfasst, der darin besteht, eine Charge (2) von Platten (3) zu öffnen, indem ein längliches Verbindungsmittel (13), das die Platten (3) der Charge (2) zusammenhält, durchtrennt wird, und zwar mit Hilfe des Schneidemittels (14), das sich am Werkzeug (7) befindet, das am Aktor (8) des Manipulators (6) der Beschickungsvorrichtung (1) nach einem der vorangehenden Ansprüche montiert ist.

10. Beschickungsvorrichtung nach Anspruch 9, **dadurch gekennzeichnet, dass** für den Vorgang des Schneidens des Verbindungsmittels (13) das Werkzeug (7) so bewegt wird, dass die Spitze (21), die sich am Schneidemittel (14) befindet, mit ihrem Endteil zwischen das Verbindungsmittel (13) und die Charge (2) gelangt, und anschließend die Zange (12) betätigt wird, um das Verbindungsmittel (13) zu greifen;
wobei die bewegliche Klinge (22), die sich am Schneidemittel (14) befindet, anschließend bewegt wird, um das Verbindungsmittel (13) zu durchtrennen.

11. Beschickungsvorrichtung nach Anspruch 9 oder 10, **dadurch gekennzeichnet, dass** das Werkzeug (7) bewegt wird und das in der Zange (12) eingespannte Verbindungsmittel (13) mitnimmt.

12. Beschickungsvorrichtung nach einem der Ansprüche 9 bis 11, **dadurch gekennzeichnet, dass** das Werkzeug (7) das Verbindungsmittel (13) in den Zerstörer (15), den die Beschickungsvorrichtung (1) umfasst, fallen lässt.

13. Beschickungsvorrichtung nach einem der Ansprüche 9 bis 12, wobei mehrere mit Verbindungsmitteln (13) versehene Chargen (2) nacheinander im Magazin (5) abgelegt werden, wobei der Schritt des Öffnens einer Charge (2) für die zuletzt abgelegte Charge (2) nicht durchgeführt wird.

## Claims

1. Loading device (1) for successively feeding cardboard sheets (3) to a processing station (4) for folding said sheets (3) in order to form packing boxes therefrom, said processing station (4) having a magazine (5) for receiving the successive sheets (3), possibly grouped into batches (2), said device having, for its part, a manipulator (6) comprising a gripping tool (7) for grasping said sheets (3), and an actuator (8) for displacing the tool (7), the device being **characterized in that** the tool (7) is provided, on the one hand, with a clamp (12) for grasping a possible tie (13) holding together the sheets (3) of a same batch (2) by forming a closed loop and, on the other hand, a cutting means (14) for opening such a tie (13).

2. Loading device (1) according to Claim 1, in which the clamp (12) takes the form of a controlled vice.

3. Loading device (1) according to either one of Claims 1 and 2, in which
the cutting means (14) has a pointed nose (21) to come between the tie (13) and the batch (2).

4. Loading device (1) according to Claim 3, in which the nose (21) forms a jaw of the clamp (12).

5. Loading device (1) according to any one of the preceding claims, in which
the cutting means (14), for its part, has a moveable cutting blade (22).

6. Loading device (1) according to any one of the preceding claims, in which
the cutting means (14) is mounted on a damper, possibly of cylinder type.

7. Loading device (1) according to any one of the preceding claims,
**characterized in that** it comprises a link (13) shredder (15).

8. Loading device (1) according to any one of the preceding claims, in which
the actuator (8) is preferably of the multi-axis robot type, on the end of which the tool (7) is mounted.

9. Method for loading batches (2) of sheets (3) into a magazine (5) of a processing station (4) for folding said sheets (3) in order to obtain boxes therefrom, comprising a step consisting mainly in transferring, into said magazine (5), sheets (3) from a stock (9), **characterized in that** it comprises a cutting operation step consisting in opening a batch (2) of sheets (3), by cutting a slender tie (13) which holds the sheets (3) of said batch (2) together, and does so using the cutting means (14) embedded on the tool (7) mounted on the actuator (8) of the manipulator (6) of the loading device (1) according to any one of the preceding claims.

10. Loading method according to Claim 9, **characterized in that**
for the tie (13) cutting operation, the tool (7) is displaced such that the nose (21) present on the cutting means (14) comes to be inserted by its end part between the tie (13) and the batch (2), then the clamp (12) is actuated to grasp the tie (13); the moveable blade (22) present on the cutting means (14) is then displaced to cut the tie (13).

11. Loading method according to Claim 9 or 10, **characterized in that**
the tool (7) is displaced and takes with it the tie (13), gripped in the clamp (12).

12. Loading method according to any one of Claims 9 to 11, **characterized in that**
the tool (7) lets go the tie (13) into the shredder (15) that the loading device (1) includes.

13. Loading method according to any one of Claims 9 to 12, in which
several batches (2) provided with ties (13) are introduced successively into the magazine (5), the batch (2) opening step not being implemented for the last batch (2) introduced.
